(19)

Europäisches Patentamt

European Patent Office

Office européen des brevets

(11) **EP 2 913 724 B1**

(12) **EUROPEAN PATENT SPECIFICATION**

(45) Date of publication and mention
of the grant of the patent:
**12.10.2016 Bulletin 2016/41**

(51) Int Cl.:
***G05B 17/00*** *(2006.01)*

(21) Application number: **15156715.3**

(22) Date of filing: **26.02.2015**

(54) **PLC with a finite horizon optimization control program**

SPS MIT ENDLICHEM HORIZONTOPTIMIERUNGSSTEUERPROGRAMM

PLC AVEC UN PROGRAMME DE COMMANDE D'OPTIMISATION À HORIZON FINI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2014 EP 14000655**

(43) Date of publication of application:
**02.09.2015 Bulletin 2015/36**

(73) Proprietor: **ABB AG**
**68309 Mannheim (DE)**

(72) Inventors:
- **Listmann, Kim**
  **64287 Darmstadt (DE)**
- **Schmitt, Marius Gerhard**
  **8051 Zürich (CH)**

(56) References cited:
**WO-A1-2011/014350     US-A1- 2007 250 215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention is about a programmable logic controller (PLC), configured to be coupled to an input field device and an output field device of a regulated technical installation, said PLC comprising a processor, further comprising a computer-readable memory, further comprising an input device that receives measurements of a controlled parameter (y) of the installation from the input field device, further comprising a control program, which is stored on a computer-readable memory and which, when executed on the processor, uses the measurement of the controlled parameter (y) to produce in real time a control output (u), further comprising an output device for submitting control output (u) to the output field device for influencing the controlled parameter (y).

A Programmable Logic Controller, PLC or Programmable Controller is a digital computer used for automation of technical processes, such as control of machinery on factory assembly lines, motion control of drives, for example crane drives, etc. The technical process which is controlled with the help of the PLC is here also called a regulated technical installation.

PLCs are used in many industries and machines. Unlike general-purpose computers, the PLC is designed for multiple inputs and output arrangements, extended temperature ranges, immunity to electrical noise, and resistance to vibration and impact.

Programs to control machine operation are typically stored in battery-backed-up or non-volatile memory. A PLC is an example of a real-time system since output results must be produced in response to input conditions within a limited time, otherwise unintended operation will result.

PLCs for industrial application are subject to severe cost/benefit optimization demands, in addition to the technical demand to perform all computational routines very fast in order to meet the real time requirements. This is the reason why the computational power of the PLC processor usually is much lower than computational power of versatile personal computers (PCs) or dedicated workstations or central processors of large scale industrial control and automation systems. Industrial control and automation systems with high performance computers, on the other hand, are usually not suitable to real time operation.

Today's industrial processes are characterized by an increasing complexity and the demand for faster and more accurate execution to stay cost competitive. One important possibility to address this challenge is the installation of advanced control algorithms in the backbone of the industrial processes. Through the increasing complexity methods of adaptation need to be fundamented in the corresponding algorithms. Often this goes together with a decrease in the closed-loop performance of the industrial process (accuracy, response time, etc.).

A huge number of industrial processes is subject to changes of its system parameters while in operation. As an example consider a crane loading/unloading a ship. First, the crane has to move its trolley to pick up a new container. Hence, the trolley does only carry the hook. Later, after pick up, the trolley has to lift the container to its destination on the ship/in the port. Then, the trolley experiences a significant change in the load it has to carry due to the container hanging on the hook. The quicker both operations are performed the more containers a single crane is able to load/unload. This increases the overall capacity an automated terminal would have or decreases the need for cranes to cover a specified terminal capacity. However, speed is not the only important factor. Accuracy is also very important to be able to exactly put the containers to their destination. This will save room, and hence increases the ship/port capacity as well.

Designing a controller that is able to perform this task very fast and accurate for both load conditions is far from simple. Certainly the parameters of the system dynamics change significantly which implies that the controller parameters might have to be changed as well. Finding a simple and straightforward way to do this without lowering one's sights on the performance and accuracy, considering the restrictions in computational power of a simple PLC is a big technical challenge.

A method known in the art to handle the control of dynamic systems with fast changing system parameters while in operation is the model predictive control (MPC). The models used in MPC are generally intended to represent the behavior of complex dynamical systems. MPC models predict the change in the dependent variables of the modeled system that will be caused by changes in the independent variables. In a chemical process, independent variables that can be adjusted by the controller are often either the setpoints of regulatory PID controllers (pressure, flow, temperature, etc.) or the final control element (valves, dampers, etc.). Independent variables that cannot be adjusted by the controller are used as disturbances. Dependent variables in these processes are other measurements that represent either control objectives or process constraints.

MPC uses the current plant measurements, the current dynamic state of the process, the MPC models, and the process variable targets and limits to calculate future changes in the dependent variables. These changes are calculated to hold the dependent variables close to target while honoring constraints on both independent and dependent variables. The MPC typically sends out only the first change in each independent variable to be implemented, and repeats the calculation when the next change is required.

MPC is based on iterative, finite horizon optimization of a plant model. At time t the current plant state is sampled and a cost minimizing control strategy is computed (via a numerical minimization algorithm) for a relatively short time horizon in the future. Specifically, an online or on-the-fly calculation is used to explore state trajectories that emanate from the current state and find (via the solution of Euler-Lagrange equations) a cost-minimizing control strategy until time .t +T. Only the first step of the control strategy is implemented, then the plant state is sampled again and the calculations are repeated starting from the now current state, yielding a new control and new predicted state path. The prediction horizon keeps being shifted forward and for this reason MPC is also called receding horizon control. Although this approach is not optimal, in practice it has given very good results.

Historically, MPC algorithms have only been applied to slowly responding dynamics of the process industry. More recently MPC has also been used for high-performance control of drives (mainly torque) and converters. However, in this case only offline methods are applicable due to the very fast dynamics. This obstructs the use of any adaptation since the control problem needs to be solved beforehand.

The WO 2011/014350 A1 shows a control system which simultaneously controls a multi zone process with a self-adaptive model predictive controller (MPC), such as temperature control within a plastic injection molding system. The controller is initialized with basic system information. A per-identification procedure determines a suggested system sampling rate, delays or "dead times" for each zone and initial system model matrix coefficients necessary for operation of the control predictions. The recursive least squares based system model update, control variable predictions and calculations of the control horizon values are preferably executed in real time by using matrix calculation basic functions implemented and optimized for being used in a PLC environment of a high power PLC, the S7 PLC by Siemens. The number of predictions and the horizon of the control steps required to achieve the setpoint are significantly high to achieve smooth and robust control. Several matrix calculations, including an inverse matrix procedure performed at each sample pulse and for each individual zone determine the MPC gain matrices needed to bring the system with minimum control effort and variations to the final setpoint. Corrective signals, based on the predictive model and the minimization criteria explained above, are issued to adjust system heating/cooling outputs at the next sample time occurence, so as to bring the system to the desired set point. The process is repeated continuously at each sample pulse. Due to the complexity of the several matrix calculations, the control system shown here is not suitable for real time control of fast changing processes using a simple and low power PLC.

In the light of the prior art it is the problem to be solved by the present invention to develop a simple and low power programmable logic controller (PLC) which nonetheless and despite its reduced calculation performance is able to perform an MPC control algorithm for control of fast changing dynamic systems or technical installations.

The problem is solved according to the invention by a programmable logic controller (PLC) with the features of claim 1. According to the invention, the control program further comprises a dynamic model of the installation given through differential equations in state space form, which is stored in a computer-readable memory, and a cost function $J(x, u, t, t_N)$, which is stored in a computer-readable memory, mapping the state (x) of the installation model and the control output (u) onto a cost number, said cost number being associated with a predetermined target of an optimal control problem related to the technical installation, and a finite horizon optimization control program, using a numerical minimization algorithm, which is stored in a computer-readable memory and which, when executed on the processor, minimizes the cost function over a short, fixed time horizon of a small number of N steps in the future.

In the context of optimization problems, a cost function is a function that maps an event or values of one or more variables onto a real number intuitively representing some "cost" associated with the event. An optimization problem seeks to minimize a loss function.

According to the invention, the PLC controller solves the finite horizon optimal control problem given by minimizing the cost function $J(x, u, t, t_N)$.

In order to efficiently solve the finite horizon optimal control problem, an algorithm is applied which partitions the optimal control problem into a sparse static optimization problem at every time step. Sparsity reduces the amount of matrix operations to be performed and this greatly speeds up the solution generation. Only this enables to perform all operations online and hence this allows to execute the MPC algorithm on a simple and low power PLC. This achieves the desired closed-loop behavior.

An algorithm like the one applied here has been described in A. Domahidi et al., Efficient interior point Methods for Multistage Problems Arising in Receding Horizon Control, 51st IEEE Conference on Decision and Control, pp. 668-674, 2012.

The solution proposed here fills the gap which today exists between MPC algorithms and simple and low power PLC applications. Its major benefit is a versatile high-performance control algorithm that can be implemented on industrial standard controllers, simple and low power PLCs, such as the AC500 of the company ABB. This enables to address a different class of control problems with a solution that is delivering high closed-loop performance. A competitive advantage on a vast field of applications ranging from classical motion control of belts and cranes to the control of pumps and fans is created.

Furthermore the solution enables simpler/cheaper set-ups of the huge process control automation systems since the MPC capacity, that is extensively used in this industry, can be executed locally on a standard simple and low power PLC client. According to an advantageous embodiment of the invention, the .cost function is a quadratic cost function, the optimal control problem is a quadratic optimization problem, and the finite horizon optimization control program is configured to apply at each time step a rank one matrix forward substitution scheme. The rank one forward substitution scheme is important to handle, for example, quadratic constraints efficiently.

According to an advantageous embodiment of the invention, the control program further comprises a state estimation program, which is stored on the computer-readable memory, and which, when executed on the processor, uses the measurement of the controlled parameter (y) to produce a prediction of the state (x) over the short, fixed time horizon of a small number of N steps in the future.

According to an advantageous embodiment of the invention, the control program further comprises a parameter estimation program, which is stored on the computer-readable memory, and which, when executed on the processor, uses the prediction of the state (x) over the short, fixed time horizon of a small number of N steps in the future to produce a prediction of model parameters of the dynamic model of the installation over the short, fixed time horizon of a small number of N steps in the future.

According to an advantageous embodiment of the invention, the control program, when executed on the processor, uses the prediction of the state (x) over the short, fixed time horizon of a small number of N steps in the future and the prediction of model parameters of the dynamic model of the installation over the short, fixed time horizon of a small number of N steps in the future and the finite horizon optimization control program to produce an adapted control input (u) based on the current situation of the technical installation.

An on-line model-based predictive process control system according to the invention, comprises a regulated technical installation, having at least one input field device that measures a controlled parameter (y) of the installation, and having at least one output field device capable of receiving control output (u) and influencing the controlled parameter (y), and a programmable logic controller (PLC) as was described above.

The input field device can for example be a measurement instrument, such as an industrial temperature meter, a flow meter, a displacement meter or the like, which measures a process parameter of the technical process, or technical installation, to be controlled, and which has a communication interface which is used to communicate the measurement value to the PLC. Such a communication interface can in a simple form be an analog interface, or a digital interface, even a more complex interface like a field bus interface.

The output field device is an actuator, for example a heating controller or a drive controller, receiving via a communication interface set point values or other control input from the PLC to perform any kind of actuating activity. Also here, the communication interface can in a simple form be an analog interface, or a digital interface, even a more complex interface like a field bus interface.

Accordingly, the PLC has a number of I/O devices, which may be realized in the form of separate I/O modules or as integrated field bus or analog or digital interfaces, which are connected via suitable communication lines with the input field device and the output field device.

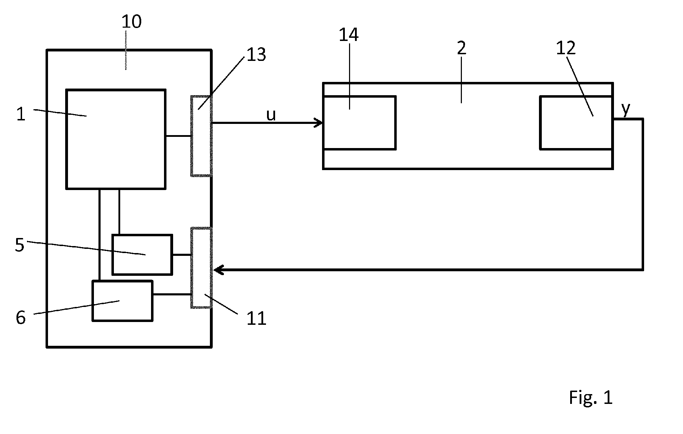

The invention is now further explained with reference to the figures. It is shown in Figure 1 a functional block diagram of an on-line model-based predictive process control system with a PLC according to the invention,

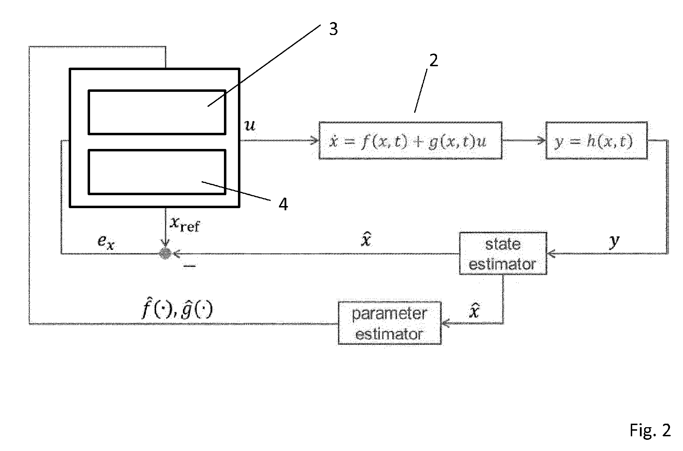

Figure 2 .a basic control scheme of the PLC according to the invention

Figure 1 shows a functional block diagram of an on-line model-based predictive process control system with a PLC 10, which is coupled to a technical installation 2. The technical installation 2 may be for example a chemical plant, a refinery, or a sub system of a plant, for example a drive, a tank, a reactor vessel, or an injection molding machine, or an extrusion machine. Part of the technical installation 2 is an input field device 12, which may be for example a temperature measurement instrument or a flow meter or a displacement sensor or the like, a field measurement device which measures a controlled parameter of the technical installation, for example a temperature, a flow rate of a medium, a distance or a speed or the like. The PLC 10 has an input device 11, for example an I/O module, which is configured to receive the measurements of the controlled parameter y of the technical installation 2 from the input field device 12.

The measurements y received through the input device 11 are inside the PLC used by a state estimation program 5 and a parameter estimation program 6, which both cooperate with the control program 1 of the PLC.

The PLC further has an output device 13. The output device 13 may be another I/O module. The output device 13 is configured to submit control output u to the technical installation 2. The control output may be a set point for a temperature controller in the technical installation, or a set point for a control valve, or a set point for a drive control or the like. For receiving the control output from the PLC, the technical installation 2 has a output field device 14, which may be any suitable kind of actuator, for example a controlled heater, a control valve, a drive control or the like.

Figure 2 shows a basic control scheme of the PLC 10according to the invention, with the PLC comprising the optimization algorithm 4 which partitions the optimal control problem into a sparse static optimization problem at every time step.

In the control scheme as shown in figure 2, we consider a dynamic system model 20 given through ordinary differential equations in state space form by

$$\dot{x} = f(x, t) + g(x, t)u$$

with the state x, the control input u, and smooth functions f(), g() that depend on the current state and time. In order to achieve a high performance, in particular a fast response time, the available control input must be used as much as possible to drive the system to the desired state.

Since all practical systems have limited input power this puts a constraint on the maximal value of the control input. Hence, the controller design is even harder since this constraint needs to be respected at all times.

A classical method to overcome this design problem is, as has been mentioned before, to use Model Predictive Control (MPC) since then all input and state constraints can be respected directly in the design of an appropriate control input.

The MPC scheme according to the example shown in figure 2 also relies on the use of an MPC scheme to control the time varying dynamics, and it is applied as follows: First an appropriate objective function describing the target of the control problem is chosen. Given the crane example from above, minimizing the travel time of the containers and penalizing the positioning error could be a good choice. Generally this leads to a function

$$J(x, t, t_N, u)$$

In order to find a suitable control input the PLMPC controller solves the finite horizon optimal control problem given by

$$\min_{t \in [t_k, t_N]} J(x, t, t_N, u)$$

subject to $|u| < u_{max}$, $||x|| < x_{max}$ and $\dot{x} = f(x, t) + g(x, t)u$ over a fixed horizon of N steps. To do this in practice the dynamics need to be discretized first. In the course of this horizon and the motion of the system, the dynamics of the system will change due to the time dependence. Hence, the above optimization needs to be performed online at every time step to be able to incorporate the time-varying nature of the dynamics into the optimal control problem.

This implies two things: First, a very effective algorithm must be used to solve the optimal control problem since it must be done online and is typically computationally very costly. Second, the time-varying nature of the dynamics must be estimated based on the measurements performed.

Hence, a parameter and state estimator 6, 5 is needed to adopt the description of the dynamics over the horizon. The general control loop structure is given in Fig. 2.

While the second part can be solved using standard estimation procedures, e.g. recursive least squares, classical observers, extended Kalman filters, etc., the main aspect of the invention lies in the first part.

In order to efficiently solve the finite horizon optimal control problem, a method is applied, the main trick of which is to partition the optimal control problem into a sparse static optimization problem at every time step. Sparsity reduces the amount of matrix operations to be performed and this greatly speeds up the solution generation. Only this enables to perform all operations online and is hence the core element of the invention since it allows to execute the MPC algorithm on a simple an low-performance PLC. This achieves the desired closed-loop behavior.

Bezugszeichenliste

1    Control program
2    technical installation
3    cost function
4    finite horizon optimization control program
5    state estimation program
6    parameter estimation program
10   PLC
11   input device
12   input field device

13    output device
14    output field device
20    dynamic system model

**Claims**

1.  A programmable logic controller (PLC, 10), configured to be coupled to an input field device (12) and an output field device (14) of a regulated technical installation (2), said PLC (10) comprising

    - a processor,
    - a computer-readable memory,
    - an input device (11) that receives measurements of a controlled parameter (y) of the installation (2) from the input field device (12),
    - a control program (1), which is stored on a computer-readable memory and which, when executed on the processor, uses the measurement of the controlled parameter (y) to produce in real time a control output (u),
    - an output device (13) for submitting control output (u) to the output field device (14) for influencing the controlled parameter (y), wherein the control program further comprises
    - a dynamic model (20) of the installation given through differential equations in state space form, which is stored in a computer-readable memory;
    - a cost function (3) $J(x, u, t, t_N)$, which is stored in a computer-readable memory, mapping the state (x) of the installation model and the control output (u) onto a cost number, said cost number being associated with a predetermined target of an optimal control problem related to the technical installation,
    - a finite horizon optimization control program (4), using a numerical minimization algorithm, which is stored in a computer-readable memory and which, when executed on the processor, minimizes the cost function over a short, fixed time horizon of a small number of N steps in the future,

    wherein the control program further uses the minimized cost function to produce in real time the control output (u), and wherein the finite horizon optimization control program is configured to partition the optimal control problem in to a sparse static optimization problem at each of the N time steps.

2.  A programmable logic controller (10) according to claim 1, wherein the .cost function (3) is a quadratic cost function, the optimal control problem is a quadratic optimization problem, and wherein the finite horizon optimization control program (4) is configured to apply at each time step a rank one matrix forward substitution scheme.

3.  A programmable logic controller according (10) to claim 1, wherein the control program (1) further comprises a state estimation program (5), which is stored on the computer-readable memory, and which, when executed on the processor, uses the measurement of the controlled parameter (y) to produce a prediction of the state (x) over the short, fixed time horizon of a small number of N steps in the future.

4.  A programmable logic controller (10) according to claim 3, wherein the control program (1) further comprises a parameter estimation program (6), which is stored on the computer-readable memory, and which, when executed on the processor, uses the prediction of the state (x) over the short, fixed time horizon of a small number of N steps in the future to produce a prediction of model parameters of the dynamic model of the installation over the short, fixed time horizon of a small number of N steps in the future.

5.  A programmable logic controller (10) according to claim 4, wherein the control program (1), when executed on the processor, uses the prediction of the state (x) over the short, fixed time horizon of a small number of N steps in the future and the prediction of model parameters of the dynamic model of the installation over the short, fixed time horizon of a small number of N steps in the future and the finite horizon optimization control program to produce an adapted control input (u) based on the current situation of the technical installation.

6.  An on-line model-based predictive process control system, comprising a regulated technical installation (2), having at least one input field device (12) that measures a controlled parameter (y) of the installation (2), and having at least one output field device (14) capable of receiving control output (u) and influencing the controlled parameter (y), and a programmable logic controller (PLC, 10) according to one of the preceding claims.

**Patentansprüche**

1. Programmierbare Logiksteuerung (PLC, "programmable logic controller", 10), konfiguriert, an eine Eingabefeldvorrichtung (12) und eine Ausgabefeldvorrichtung (14) einer regulierten technischen Installation (2) gekoppelt zu sein, wobei die PLC (10) aufweist

   - einen Prozessor,
   - einen rechnerlesbaren Speicher,
   - eine Eingabevorrichtung (11), welche Messungen eines gesteuerten Parameters (y) der Installation (2) von der Eingabefeldvorrichtung (12) empfängt,
   - ein Steuerungsprogramm (1), welches in einem rechnerlesbaren Speicher gespeichert ist und welches, wenn auf dem Prozessor ausgeführt, die Messung des gesteuerten Parameters (y) verwendet, um in Echtzeit eine Steuerungsausgabe (u) zu erzeugen,
   - eine Ausgabevorrichtung (13) zum Übermitteln der Steuerungsausgabe (u) an die Ausgabefeldvorrichtung (14) zur Beeinflussung des gesteuerten Parameters (y), wobei das Steuerungsprogramm des Weiteren aufweist
   - ein dynamisches Modell (20) der Installation, das durch Differentialgleichungen in Zustandsraum-Form gegeben ist, welches in einem rechnerlesbaren Speicher gespeichert ist;
   - eine Kostenfunktion (3) $J(x, u, t, t_N)$, welche in einem rechnerlesbaren Speicher gespeichert ist, die den Zustand (x) des Installationsmodells und die Steuerungsausgabe (u) auf eine Kostenzahl abbildet, wobei die Kostenzahl mit einem vorbestimmten Ziel eines optimalen Steuerungsproblems verknüpft ist, welches sich auf die technische Installation bezieht,
   - ein endliches Horizontoptimierungssteuerungsprogramm (4), welches einen numerischen Minimierungsalgorithmus verwendet, welches in einem rechnerlesbaren Speicher gespeichert ist und welches, wenn auf dem Prozessor ausgeführt, die Kostenfunktion über einen kurzen, fixen Zeithorizont einer kleinen Zahl von N Schritten in der Zukunft minimiert,

   wobei das Steuerungsprogramm des Weiteren die minimierte Kostenfunktion verwendet, um in Echtzeit die Steuerungsausgabe (u) zu erzeugen,
   und wobei das endliche Horizontoptimierungssteuerungsprogramm konfiguriert ist, das optimale Steuerungsproblem bei jedem der N Zeitschritte in ein statisches "Sparse"-Optimierungsproblem zu teilen.

2. Programmierbare Logiksteuerung (10) nach Anspruch 1, wobei die Kostenfunktion (3) eine quadratische Kostenfunktion ist, das optimale Steuerungsproblem ein quadratisches Optimierungsproblem ist, und wobei das endliche Horizontoptimierungssteuerungsprogramm (4) konfiguriert ist, bei jedem Zeitschritt ein Rang-Eins-Matrix-Vorwärtssubstitutionsschema anzuwenden.

3. Programmierbare Logiksteuerung (10) nach Anspruch 1, wobei das Steuerungsprogramm (1) des Weiteren ein Zustandseinschätzungsprogramm (5) aufweist, welches in dem rechnerlesbaren Speicher gespeichert ist und welches, wenn auf dem Prozessor ausgeführt, die Messung des gesteuerten Parameters (y) verwendet, um eine Vorhersage des Zustands (x) über den kurzen, fixen Zeithorizont einer kleinen Zahl von N Schritten in der Zukunft zu erzeugen.

4. Programmierbare Logiksteuerung (10) nach Anspruch 3, wobei das Steuerungsprogramm (1) des Weiteren ein Parametereinschätzungsprogramm (6) aufweist, welches in dem rechnerlesbaren Speicher gespeichert ist und welches, wenn auf dem Prozessor ausgeführt, die Vorhersage des Zustands (x) über den kurzen, fixen Zeithorizont einer kleinen Zahl von N Schritten in der Zukunft verwendet, um eine Vorhersage von Modellparametern des dynamischen Modells der Installation über den kurzen, fixen Zeithorizont einer kleinen Zahl von N Schritten in der Zukunft zu erzeugen.

5. Programmierbare Logiksteuerung (10) nach Anspruch 4, wobei das Steuerungsprogramm (1), wenn auf dem Prozessor ausgeführt, die Vorhersage des Zustands (x) über den kurzen, fixen Zeithorizont einer kleinen Zahl von N Schritten in der Zukunft und die Vorhersage von Modellparametern des dynamischen Modells der Installation über den kurzen, fixen Zeithorizont einer kleinen Zahl von N Schritten in der Zukunft und das endliche Horizontoptimierungssteuerungsprogramm verwendet, um eine angepasste Steuerungseingabe (u) basierend auf der momentanen Situation der technischen Installation zu erzeugen.

6. Auf einem On-line-Modell basierendes, vorhersagendes Prozesssteuerungssystem, aufweisend eine regulierte technische Installation (2) mit zumindest einer Eingabefeldvorrichtung (12), welche einen gesteuerten Parameter (y) der Installation (2) misst, und mit zumindest einer Ausgabefeldvorrichtung (14), die fähig ist, eine Steuerungsausgabe (u) zu empfangen und den gesteuerten Parameter (y) zu beeinflussen, und eine programmierbare Logiksteuerung (PLC, 10) nach einem der vorangehenden Ansprüche.

## Revendications

1. Automate programmable industriel (PLC, 10), configuré de sorte à être couplé à un dispositif de champ d'entrée (12) et à un dispositif de champ de sortie (14) d'une installation technique régulée (2), ledit automate PLC (10) comprenant :

    - un processeur,
    - une mémoire lisible par ordinateur,
    - un dispositif d'entrée (11) qui reçoit des mesures d'un paramètre régulé (y) de l'installation (2) en provenance du dispositif de champ d'entrée (12),
    - un programme de commande (1), qui est stocké sur une mémoire lisible par ordinateur et qui, lorsqu'il est exécuté sur le processeur, utilise la mesure du paramètre régulé (y) pour produire en temps réel une sortie de commande (u),
    - un dispositif de sortie (13) pour soumettre une sortie de commande (u) au dispositif de champ de sortie (14) pour influencer le paramètre régulé (y), dans lequel le programme de commande comprend en outre :
    - un modèle dynamique (20) de l'installation donné au moyen d'équations différentielles sous une forme d'espace d'états, qui est stocké dans une mémoire lisible par ordinateur ;
    - une fonction de coût (3) $J(x, u, t, t_N)$, qui est stockée dans une mémoire lisible par ordinateur, mappant l'état (x) du modèle d'installation et la sortie de commande (u) sur un chiffre du coût, ledit chiffre du coût étant associé à une cible prédéterminée d'un problème de commande optimale lié à l'installation technique,
    - un programme de commande d'optimisation en horizon fini (4), utilisant un algorithme de minimisation numérique, qui est stocké sur une mémoire lisible par ordinateur et qui, lorsqu'il est exécuté sur le processeur, minimise la fonction de coût sur un court horizon temporel fixé d'un petit nombre de N étapes dans le futur,

    dans lequel le programme de commande utilise en outre la fonction de coût minimisée pour produire en temps réel la sortie de commande (u) et dans lequel le programme de commande d'optimisation en horizon fini est configuré pour diviser le problème de commande optimale en un problème d'optimisation statique épars à chacune des N étapes temporelles.

2. Automate programmable industriel (10) selon la revendication 1, dans lequel la fonction de coût (3) est une fonction de coût quadratique, le problème de commande optimale est un problème d'optimisation quadratique et dans lequel le programme de commande d'optimisation en horizon fini (4) est configuré de sorte à appliquer à chaque étape temporelle un schéma de substitution avant de matrice de rang un.

3. Automate programmable industriel (10) selon la revendication 1, dans lequel le programme de commande (1) comprend en outre un programme d'estimation d'état (5), qui est stocké sur la mémoire lisible par ordinateur et qui, lorsqu'il est exécuté sur le processeur, utilise la mesure du paramètre régulé (y) pour produire une prédiction de l'état (x) sur le court horizon temporel fixé d'un petit nombre de N étapes dans le futur.

4. Automate programmable industriel (10) selon la revendication 3, dans lequel le programme de commande (1) comprend en outre un programme d'estimation de paramètre (6), qui est stocké sur la mémoire lisible par ordinateur et qui, lorsqu'il est exécuté sur le processeur, utilise la prédiction de l'état (x) sur le court horizon temporel fixé d'un petit nombre de N étapes dans le futur pour produire une prédiction des paramètres de modèle du modèle dynamique de l'installation sur le court horizon temporel fixé d'un petit nombre de N étapes dans le futur.

5. Automate programmable industriel (10) selon la revendication 4, dans lequel le programme de commande (1), lorsqu'il est exécuté sur le processeur, utilise la prédiction de l'état (x) sur le court horizon temporel fixé d'un petit nombre de N étapes dans le futur ainsi que la prédiction des paramètres de modèle du modèle dynamique de l'installation sur le court horizon temporel fixé d'un petit nombre de N étapes dans le futur et le programme de commande d'optimisation en horizon fini pour produire une entrée de commande adaptée (u) en se basant sur la situation actuelle de l'installation technique.

6. Système de commande prédictive de processus basé sur un modèle en ligne, comprenant une installation technique régulée (2), ayant au moins un dispositif de champ d'entrée (12) qui mesure un paramètre régulé (y) de l'installation (2), et ayant au moins un dispositif de champ de sortie (14) qui peut recevoir une sortie de commande (u) et influencer le paramètre régulé (y), ainsi qu'un automate programmable industriel (PLC, 10) selon l'une quelconque des revendications précédentes.

3

2

$\dot{x} = f(x,t) + g(x,t)u$

$y = h(x,t)$

$u$

4

$x_{\mathrm{ref}}$

$e_x$

$-$

$\hat{x}$

state estimator

$y$

$\hat{f}(\cdot), \hat{g}(\cdot)$

parameter estimator

$\hat{x}$

Fig. 2

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011014350 A1

**Non-patent literature cited in the description**

- **A. DOMAHIDI et al.** Efficient interior point Methods for Multistage Problems Arising in Receding Horizon Control. *51st IEEE Conference on Decision and Control,* 2012, 668-674